# EUROPEAN PATENT SPECIFICATION

(11) **EP 3 607 496 B1**
(45) Date of publication and mention of the grant of the patent: **06.05.2026**
(21) Application number: 18780733.4
(22) Date of filing: 06.04.2018
(51) Int. Cl.: G06N 3/045, G06N 5/01, G06N 3/084, G06N 3/044

(54) **CONDITIONAL GRAPH EXECUTION BASED ON PRIOR SIMPLIFIED GRAPH EXECUTION**
BEDINGTE GRAPHAUSFÜHRUNG BASIEREND AUF EINER VORHERIGEN AUSFÜHRUNG EINES VEREINFACHTEN GRAPHEN
EXÉCUTION DE GRAPHE CONDITIONNELLE BASÉE SU UNE EXÉCUTION DE GRAPHE SIMPLIFIÉ ANTÉRIEURE

(30) Priority: 07.04.2017 US 201762483133 P; 04.04.2018 US 201815945454
(43) Date of publication of application: 12.02.2020
(73) Proprietor: Tenstorrent AI ULC, Toronto, Ontario M3C 3E5 (CA)
(72) Inventor: BAJIC, Ljubisa, Toronto Ontario M3C 3E5 (CA); TRAJKOVIC, Milos, Toronto Ontario M3C 3E5 (CA); HAMER, Ivan, Toronto Ontario M3C 3E5 (CA)
(74) Representative: Haseltine Lake Kempner LLP
(86) International application number: PCT/IB2018/052408
(87) International publication number: WO 2018/185725

(56) References cited:
- WO-A1-2009/142872
- CN-A- 105 181 898
- CN-A- 106 250 863
- US-A1- 2014 075 004
- XUANYI DONG ET AL: "More is Less: A More Complicated Network with Less Inference Complexity", 25 March 2017 (2017-03-25), XP055758028, Retrieved from the Internet <URL:https://arxiv.org/pdf/1703.08651v1.pdf> [retrieved on 20201208]
- AMJAD ALMAHAIRI ET AL: "Dynamic Capacity Networks", 24 November 2015 (2015-11-24), XP055479670, Retrieved from the Internet <URL:http://www.jmlr.org/proceedings/papers/v48/almahairi16.pdf>

## Description

### BACKGROUND

The recent surge in the performance of machine intelligence systems is not due to the development of revolutionary new algorithms. Indeed, the core algorithms used in machine intelligence applications today stem from a body of work that is now over half a century old. Instead, it has been improvements in the hardware and software that implement machine intelligence algorithms in an efficient manner that has fueled the recent surge. Algorithms that were once too computationally intensive to implement in a useful manner with even the most sophisticated of computers can now be executed with specialized hardware on an individual user's smart phone. The improvements in hardware and software take various forms. For example, graphical processing units traditionally used to process the vectors used to render polygons for computer graphics have been repurposed in an efficient manner to manipulate the data elements used in machine intelligence processes. As another example, certain classes of hardware have been designed from the ground-up to implement machine intelligence algorithms by using specialized processing elements such as systolic arrays. Further advances have centered around using collections of transistors and memory elements to mimic, directly in hardware, the behavior of neurons in a traditional artificial neural network (ANN). There is no question that the field of machine intelligence has benefited greatly from these improvements. However, despite the intense interest directed to these approaches, machine intelligence systems still represent one of the most computationally and energy intensive computing applications of the modern age, and present a field that is ripe for further advances.

The reason machine intelligence applications are so resource hungry is that the data structures being operated on are generally very large, and the number of discrete primitive computations that must be executed on each of the data structures is likewise immense. A traditional ANN takes in an input vector, conducts calculations using the input vector and a set of weight vectors, and produces an output vector. Each weight vector in the set of weight vectors is often referred to as a layer of the network, and the output of each layer serves as the input to the next layer. In a traditional network, the layers are fully connected, which requires every element of the input vector to be involved in a calculation with every element of the weight vector. Therefore, the number of calculations involved increases with a power law relationship to the size of each layer. Furthermore, this aspect of machine intelligence algorithms makes them difficult to parallelize because the calculations for each layer depend on the output of the prior layer.

The problems mentioned in the prior paragraph are further exacerbated by modern ANNs. Modern ANN approaches are often referred to in the industry and literature as "deep learning" approaches. This is often a reference to the large number of layers involved, or the complexity of the relationships between the outputs of one layer and the inputs of the other layers. For example, in a modern deep learning ANN, the outputs of a downstream layer could be fed back to a prior layer which thereby adds a recursive element to the overall computation. Both the increase in layers, and the additional complexity associated with recursive relationships between the layers, increase the computational resources needed to implement a modern ANN.

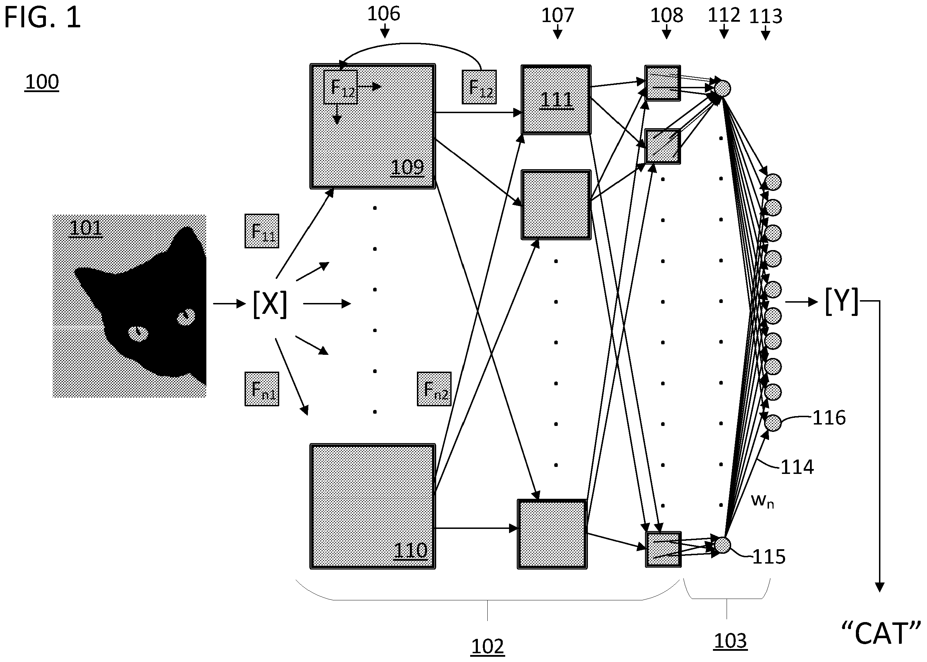

Fig.1 illustrates a directed graph 100 for the computation of a modern machine intelligence system. The input to directed graph 100 is an input tensor X. The output of directed graph 100 is an output tensor Y. The input could be an encoding for a picture, such as an image of a cat 101. In this example, execution of directed graph 100 involves the graph providing an encoding of a textual guess as to what the content of the encoded image contained. The graph output can be referred to as an inference generated by the directed graph because the machine intelligence system is effectively inferring what the picture shows from the encoding of the picture. As such, if directed graph 100 represented a properly trained machine intelligence system, execution of graph 100 with input tensor X would produce an output tensor Y which encoded the word "CAT" as illustrated.

The edges of directed graph 100 represent calculations that must be conducted to execute the graph. In this example, the graph is broken into two sections-a convolutional section 102 and a fully connected section 103. The convolutional portion can be referred to as a convolutional neural network (CNN). The vertices in the directed graph of CNN 102 form a set of layers which includes layers 106, 107, and 108. The layers each include sets of tensors such as tensors 109, 110, and 111. The vertices in the directed graph of fully connected section 103 also form a set of layers which includes layers 112 and 113. Each edge in directed graph 100 represents a calculation involving the origin vertex of the edge. In CNN 102, the calculations are convolutions between the origin vertex and a filter. Each edge in CNN 102 is associated with a different filter F₁₁, Fₙ₁, F₁₂, Fₙ₂ etc. As illustrated, filter F₁₂ and tensor 109 are subjected to a full convolution to generate one element of tensor 111. Filter F₁₂ is "slid around" tensor 109 until a convolution operation has been conducted between the filter and the origin vertex. In other approaches, filter F12 and a portion of tensor 109 are multiplied to generate one element of tensor 111 and the full convolution is used to generate multiple elements of tensor 111. In fully connected section 103, the calculations are multiplications between a set of weights and the values from the prior layer. In fully connected section 103, each edge is associated with a unique weight value that will be used in the calculation. For example, edge 114 represents a multiplication between weight wₙ and input value 115. The value of element 116 is the sum of a set of identical operations involving all the elements of layer 112 and a set of weight values that uniquely correspond to the origin vertex of each edge that leads to element 116.

Execution of directed graph 100 involves many calculations. In the illustration, dots are used in the vertical directions to indicate the large degree of repetition involved in the directed graph. Furthermore, directed graph 100 represents a relatively simply ANN, as modern ANNs can include far more layers with far more complex interrelationships between the layers. Although not illustrated by directed graph 100, the outputs of one layer can loop back to be the inputs of a prior layer to form what is often referred to as a recursive neural network (RNN). The high degree of flexibility afforded to a machine intelligence system by having numerous elements, along with an increase in the number of layers and complexity of their interrelationships, makes it unlikely that machine intelligence systems will decrease in complexity in the future. Therefore, the computational complexity of machine intelligence systems is likely to increase in the future rather than diminish.

Dong et al (2017), "More is Less: A More Complicated Network with Less Inference Complexity", arXiv:1703.08651v1, discloses a network structure towards accelerating the inference process of convolutional neural networks.

### SUMMARY

The invention is as defined in and by the appended claims.

### BRIEF DESCRIPTION OF THE DRAWINGS

Figure 1 includes a directed graph of an artificial neural network in accordance with the related art.
Figure 2 includes a flow chart of a set of methods for the conditional execution of a directed graph and a corresponding data flow diagram.
Figure 3 includes an illustration of a specific approach for the deriving of a simplified version of a directed graph.
Figure 4 includes an illustration of a specific approach for obtaining and storing execution data during the execution of the simplified version of a directed graph.
Figure 5 includes an illustration of specific approaches for conditionally executing a directed graph.
Figure 6 includes an illustration of the approaches disclosed applied to a slice of a directed graph that implements a complex neural network.

### DETAILED DESCRIPTION

The execution of a directed graph can be made less computationally intensive by executing a simplified version of the graph to obtain information that is used to condition a later execution of the graph. This assertion holds true so long as the additional computational requirements for deriving the simplified version, executing the simplified version, and conditioning the execution of the graph are less computationally intensive than the differential between the computational requirements of the conditional and unconditional execution of the graph. Furthermore, this assertion is only relevant to the extent that the conditional execution produces an actionable result. If the conditional execution produces a result that is wildly inaccurate, the savings in computational complexity are not worthwhile.

Certain approaches disclosed below allow for the conditional execution of a directed graph to be conducted in an efficient manner while maintaining fidelity to the unconditional execution. Accuracy can be maintained while recognizing an increase in efficiency via various approaches. For example, specific approaches to the derivation of the simplified version of the graph, specific methods for obtaining and applying the information used for the conditional execution, and specific methods for conditioning the execution itself allow for a high fidelity result to be produced by an efficient conditional execution. Approaches from each of these classes are described in detail below in turn. Although directed graphs that implement machine intelligence algorithms have been utilized as a common example throughout this disclosure, certain approaches disclosed below are more broadly applicable to any field concerned with the efficient computation of a directed graph.

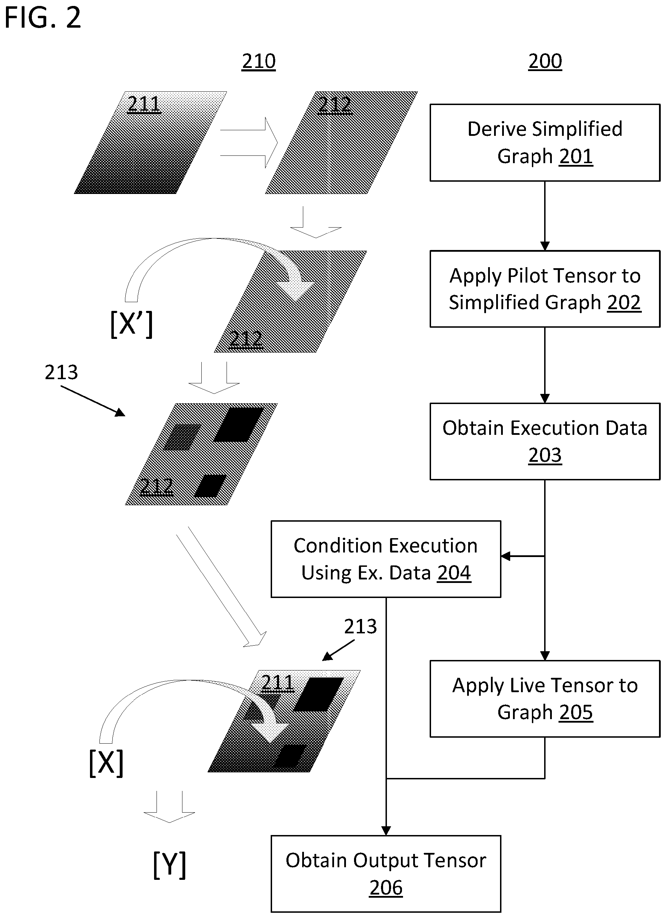

Fig. 2 includes a flow chart 200 for a set of computer-implemented methods for executing a directed graph. The steps of flow chart 200 can be explained with reference to conceptual data flow diagram 210. Each of the steps can be conducted by a processor operating in combination with a memory for storing the related data structures and the instructions necessary to carry out the steps. The flow chart presupposes the availability of a directed graph in the memory. The directed graph can be a concrete representation of the computation required to obtain an inference from a machine intelligence system in response to an input. The application of an input to the directed graph can be conceptualized as the provisioning of values to the origin vertices of the graph. For example, with reference to Fig. 1, applying input tensor X to directed graph 100 involves obtaining the values of the elements of tensor X from memory and making them available to the hardware that will conduct the calculations associated with the first set of edges of directed graph 100. Execution of the directed graph will involve the execution of calculations associated with the edges of the directed graph, and the ultimate generation of output tensor Y. Tensor Y is therefore obtained from the directed graph and can be stored in memory as a distinct unit of data once the directed graph has been executed. Tensor Y can be an inference tensor generated by a machine intelligence system. However, the directed graphs executed by the methods of flow chart 200 can include multiple inputs or multiple outputs and can represent other computational systems besides those associated with machine intelligence.

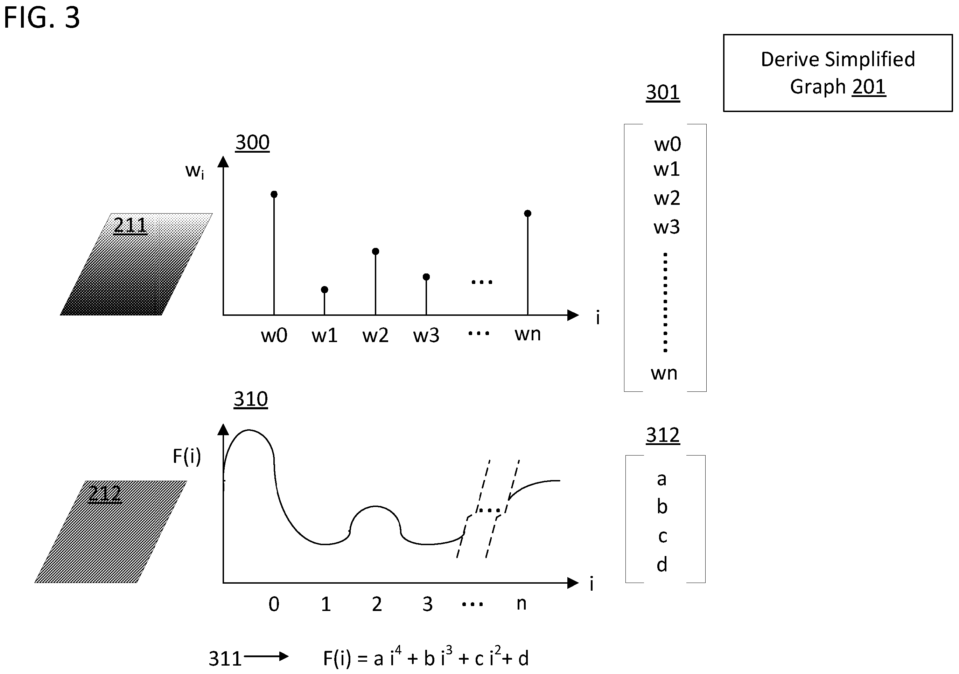

The flow chart begins with step 201 of deriving a simplified version of the directed graph. The simplified version of the graph can be executed by the processor more efficiently than the directed graph itself. Approaches for deriving the simplified version of the directed graph are described below with reference to Fig. 3. The simplified version of the directed graph may be a down-sampled version of the directed graph. The down-sampling can involve reducing the resolution of the individual elements associated with the edges and vertices of the directed graph. For example, with specific reference to an ANN with convolutional and fully connected layers, the weight and filter values could be rounded off to reduce the number of bits required to represent each value. The simplification can be conducted at the graph, sector, layer, or element level.

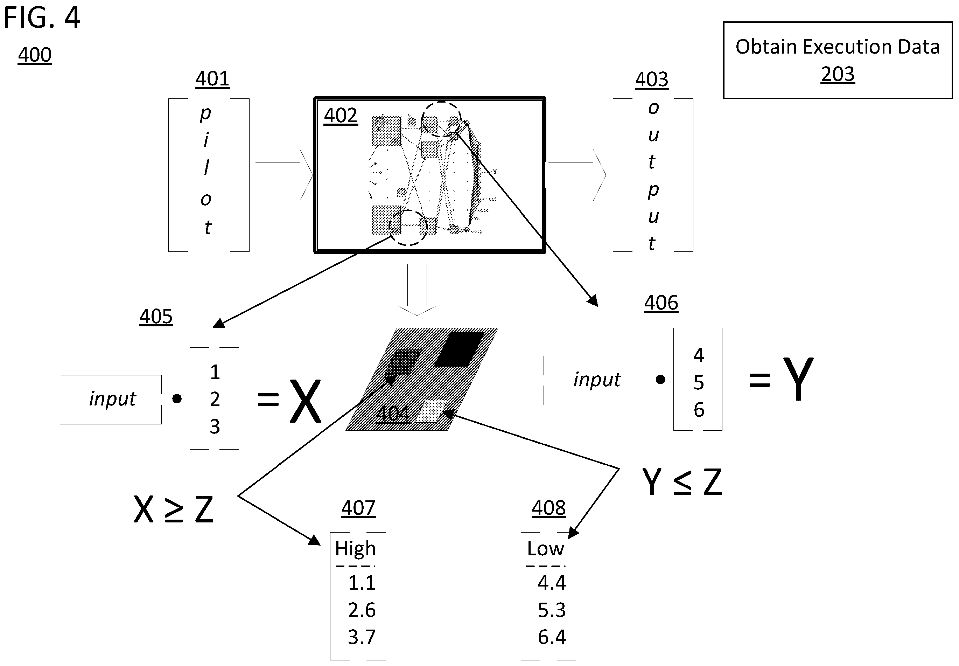

The flow chart continues with steps 202 and 203 in which a pilot input tensor is applied to the simplified version of directed graph, and a collection of execution data is obtained during the application of the pilot input tensor. These steps are conducted to evaluate the response of the simplified version of the directed graph in order to determine which portions of the graph have less of an impact on the overall execution. The obtained information can then be used at a later time to make the execution of the actual directed graph more efficient. Approaches for obtaining and storing the execution data are described below with reference to Fig. 4. The execution data will generally provide some indication of the relative contribution of different calculations conducted during execution of the graph to the overall output of the directed graph.

Steps 202 and 203 are illustrated as sequential because the execution data is generally available for storage in memory after the input tensor has been applied and the graph has completed execution. This is because the actual contribution of different portions of the graph to the final output might not be known with certainty until the entire graph has been executed and the output tensor has been obtained. However, depending upon what execution data is obtained, step 203 may be completed prior to the complete execution of the directed graph.

Data flow diagram 210 represents the pilot input tensor X being applied to the simplified version of the directed graph 212 to produce execution data 213. The execution data 213 is represented as a markup of the simplified version of the directed graph wherein highlighted portions are identified as having a near negligible contribution to the output tensor. However, the execution data can take on numerous other forms.

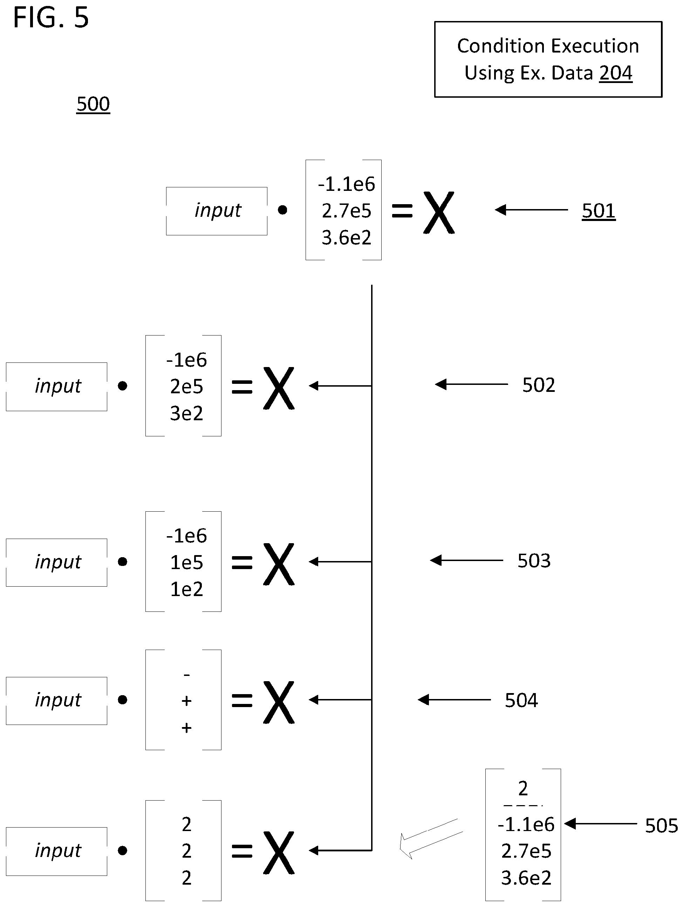

The flow chart continues with steps 204 and 205 in which a live input tensor is applied to the directed graph, in step 205, and the directed graph is conditionally executed using the collection of execution data, in step 204. The flow chart completes in step 206 when an output tensor is obtained from the conditional execution of the directed graph. The steps are conducted to execute the originally desired computation against the original directed graph in a more efficient way through the use of the execution data obtained in step 203. The execution data may provide an estimate of which portions of the directed graph can be computed in a more efficient, but less accurate, fashion without impacting the fidelity of the directed graph execution. As such, they provide information concerning the tradeoff between computing efficiency and accuracy. The output tensor obtained in step 206 will therefore be similar to the output tensor that would have been obtained if directed graph 211 was not conditionally executed, but will be obtained with less computing resources. Approaches for conditioning the execution of the directed graph to obtain the output tensor in response to the application of the live input tensor are described below with reference to Fig. 5.

Steps 204 and 205 are illustrated as both stemming from step 203 and leading to step 206 because they can be executed in either order or simultaneously. For example, the execution data can be used to modify the directed graph before the input tensor is applied by changing the values associated with the vertices or edges of the graph. In the example of a machine intelligence system, such an approach could involve rounding or down-sampling the values associated with the weights or filters of the system prior to the application of an input to the system. As another example, the execution data can be used to condition execution of the directed graph by inhibiting specific calculations in real time as they are set to occur.

Data flow diagram 210 represents the live input tensor X being applied to directed graph 211 overlain with execution data 213. The execution of the directed graph is illustrated as producing output vector Y. In keeping with the above explanations of the data flow diagram, the execution data 213 could represent portions of the directed graph that have a negligible impact on the output tensor which are therefore inhibited during the conditional execution of directed graph 211 with input tensor X. The live input tensor and pilot input tensor are both identified using the reference character X. This is because benefits arise from having the two tensors be similar. In particular, in the machine intelligence space, many systems are based around a classification problem in which the input is recognized as belonging to a specific class. Therefore, the directed graph may have widely different responses based on the class of the input vector. Generally, the pilot input tensor and live input tensor should be stochastically dependent to assure that actionable information is obtained from the simplified execution of the directed graph.

The methods illustrated by flow chart 200 are applied to the computation of a neural network. Directed graph 211 is a neural network and a set of edges of the directed graph are calculations involving a set of weights for the neural network. If the neural network involved convolutional layers, the set of edges could also include calculations involving the convolution of a set of values with a filter of the neural network. The input tensor, the weights, and the filters could all be four or five dimensional tensors. The filters and weights of the neural network could be altered during training of the neural network. The execution of the directed graph could be conducted during training or during deployment of the neural network for purposes of obtaining inference tensors from the neural network. The inference tensors could be a response of the neural network to the live input tensor. The conditional execution of the directed graph could produce the inference tensor in an efficient manner compared to the non-conditional execution of the directed graph. For example, the conditional computation of the neural network could be less computationally intensive than a non-conditional computation of the neural network using the same input tensor, but the inference tensor could be equivalent to the inference tensor that would have been produced during the non-conditional execution. For example, if accuracy has been maintained, the conditional execution of a directed graph with a neural network used for classification would produce the same class in response to a given input tensor as the unconditional execution of the directed graph using the same input tensor.

The simplified version of the directed graph can be executed more efficiently than the directed graph itself. The simplified version of the directed graph will generally be derived from the original version of the directed graph. The reason for using the directed graph as a starting point is that the purpose of the simplified version of the directed graph is to provide an approximation of the behavior of the original directed graph. The simplified version of the directed graph may be a down-sampled version of the directed graph or a version in which individual values in the directed graph were rounded, replaced by more basic data structures, or otherwise simplified. An example of the replacement of a value with a more basic data structure is the replacement of a high precision floating point data structure with a low precision fixed point data structure. The simplified version of the directed graph could also exhibit more dramatic differences as compared to the original directed graph. For example, the simplified version could have vertices and edges associated with tensors of lower rank or dimensionality than those corresponding with the respective vertices and edges of the original directed graph. Furthermore, the simplified version of the directed graph could have inhibited edges, or vertices and edges that have been entirely removed, as compared to the original directed graph.

In situations in which the simplified version is derived via a down-sampling process, the down-sampling of the directed graph can be conducted in numerous ways. Generally, the deriving of the simplified version of the directed graph in step 201 would involve down-sampling the directed graph by a sampling factor, S. The simplified version of the directed graph would thereby be a down-sampled version of the directed graph. For example, tensors associated with the vertices and edges of the directed graph could be down-sampled by a factor of S or by taking S neighboring elements along any number of dimensions and averaging them. In the specific example of a directed graph implementing an ANN, a one-dimensional layer of weights in the ANN could be down-sampled by grouping the weights into groups of five, with the two nearest neighbors to every fifth weight being pulled into a group, and averaging the values. In this example, the down-sampling rate S = 5. The down-sampling could also be conducted in any dimension by any rate. The down-sampling can use polynomial interpolation. In the specific approach of an ANN, the deriving of the simplified version of a neural network could include down-sampling a set of weight values, filter values, or any other value used in the computation of the neural network by a sampling factor using the above referenced approaches.

The simplified version of the directed graph could also be simplified in terms of resolution in that the individual elements associated with the edges and vertices of the directed graph could be simplified to more basic values. Generally, the original values associated with the execution of the directed graph could be replaced by replacement values to simplify the execution of the directed graph. The replacement values, along with any data from the original directed graph that was not replaced, would represent the simplified version of the directed graph. The replacement values can exhibit various relationships with the original values. For example, the replacement values can be rounded versions of the original values or similar values represented by more basic data structures than the original values. In a specific example, the original values can undergo a process that involves reducing a number of bits of the original values to obtain the replacement values. In situations in which the original values are represented by floating point data structures, the replacement values can be calculated using a set of exponents from the set of original values. As a specific example, if the original directed graph utilized floating point numbers, the simplified version could involve discarding the mantissas and using only the exponent, or the top N bits of the exponent, to roughly represent each value in the directed graph at runtime. As another example, only the sign of the original value could be used. As another example, only a single bit could be utilized for each quantity. The resulting binarized network could be executed with high efficiency, and careful selection of the cutoff value for the binary sorting of the values could help to maintain fidelity in the performance of the simplified graph execution. These approaches could also be combined in various ways. For example, the approach of rounding off the values could be combined with replacing the value with a different data structure where the rounding interval was selected specifically to avoid the need for a higher resolution data structure.

With specific reference to an ANN, both the network and accumulation values could be replaced to simplify computation of the ANN. In an ANN with convolutional and fully connected layers, the weights and filter values could be rounded off to reduce the number of bits required to represent each value. The deriving of the simplified version of a neural network could include replacing a set of weight values, filter values, or any other value used in the computation of the neural network, with a set of replacement values using the above referenced approaches.

Fig. 3 provides an illustration of one approach for executing step 201 from Fig. 2. Two sets of axes 300 and 310 illustrate one approach for deriving a simplified version of directed graph 212 from directed graph 211. The x-axis of both sets of axes is "i" which is a counter variable for representing the elements of a tensor used in the execution of a directed graph. In this example, the tensor is a set of weights in a layer of an ANN represented by the directed graph. In a modern ANN, the number of weights can be quite large. For example, the tensor may include a million elements. The y-axis of the set of axes 300 illustrates the value of the weight associated with counter "i". In this example, the simplified version of directed graph 212 is obtained by down-sampling weight tensor 301 using polynomial interpolation. In this approach, polynomial 311 is derived to produce a function F(i) that will give an approximation of the value of weight wi. The polynomial can be represented by a set of coefficients equal to one plus the order of the polynomial. A computation utilizing weight tensor 301 can thereby be greatly simplified by transforming the computation into the polynomial space, and operating on the inputs to the weight layer using the much smaller coefficient tensor 312. Aside from the overhead associated with deriving the polynomial and transforming to and from the coefficient space, the simplified version of the directed graph will be less computationally intensive due to the reduced number of multiplications needed to execute the layer associated with weight tensor 301 in the directed graph and coefficient tensor 312 in the simplified version of the directed graph.

Once the simplified version of the directed graph is obtained, a pilot tensor is applied to the simplified version as described above with reference to step 202. The pilot tensor and simplified version of the directed graph are used to obtain relevant information regarding how the actual directed graph will respond when a live input tensor is applied to the directed graph. As such, the pilot input tensor can in some cases be identical to the live input tensor. However, the pilot input tensor can also be modified if needed to operate with the simplified version of the directed graph, or to further simplify execution of the simplified version of the directed graph. For example, the pilot input tensor could have a lower rank or dimensionality than the live input tensor if the simplified version of the directed graph was not compatible with the rank or dimensionality of the live input tensor. The pilot input tensor could also be a down sampled or otherwise simplified version of the live input tensor. For example, the pilot input tensor could be a version of the live input tensor in which the data structures used to store the values of the tensor have been replaced with more simplified structures. This approach could also be combined with one in which the directed graph itself was simplified in a similar manner. For example, if the simplified graph replaced 8-bit floating point values with 4-bit fixed point values, the pilot input tensor could do the same with the values from the live input tensor. In another class of approaches, the pilot input tensor will be a best guess attempt by another machine intelligence system to produce a tensor that will get sorted into the same class as the live input tensor. In general, the pilot input tensor will be stochastically related to the live input tensor so that the simplified directed graph will have a similar reaction to the pilot input tensor as the directed graph would have to the live input tensor.

When the pilot input tensor is applied to the simplified version of the directed graph, execution data is obtained that will be later used to condition the execution of the directed graph. The data is generally obtained during execution of the directed graph, but can be separate and distinct from the actual values that are produced to obtain the output of the directed graph. For example, the execution data can be a set of execution data values such as the outputs of each hidden layer in an ANN. However, the execution data values can also be derived from those values via a comparison or other computation. The execution data values can represent, or can be used to derive, an approximation of the relative importance of the computation from which they were generated on the overall execution of the directed graph. For example, the execution data values could each uniquely correspond with a set of vertices in the directed graph, each vertex in the set of vertices could produce a contribution to the inference tensor produced by the directed graph, and each execution data value could be proportional in magnitude to the contribution to the inference tensor of each vertex. The execution data values can correspond to any aspect of the directed graph and can represent the importance of that aspect of the directed graph in any number of ways. In specific approaches, the relative importance will be represented by set levels such as high, medium, or low. However, the relative importance could be represented by a numerical value that is proportional to an impact on the inference tensor of the corresponding aspect of the directed graph. The proportionality may be linear or logarithmic.

Fig. 4 illustrates a data flow diagram 400 of an example implementation of step 203 from Fig. 2. In the data flow diagram, pilot input tensor 401 is applied to directed graph 402 to produce output tensor 403. The main data flow for the execution of the directed graph is therefore lateral across the figure. However, the execution data 404 is produced and stored orthogonally to the main data flow of the directed graph. The execution data can be obtained and stored in various ways. The execution data can be obtained during the application of the input tensor to the simplified version of the directed graph by monitoring the values produced internally during the calculations associated with the edges of the directed graph.

The execution data is utilized to produce a markup of the simplified version of the directed graph which tags the directed graph with different levels of priority such as high, medium, or low. These priority values could then be stored in association with different portions of the directed graph. The different levels of priority can describe how much of a contribution to the output tensor the various portions of the directed graph contributed. The markup can have fixed gradations or can be a heat map with smooth transitions across the graph to indicate the various levels of priority. The priority values for each edge or vertex can be calculated in real time as the directed graph is executing calculations associated with that edge or vertex. For example, the magnitude of a specific computation can be used as a proxy for the priority of that computation, and the execution data can be saved as soon as the computation has been carried out. However, the values can also be updated continuously as the graph continues to carry out the overall computation. Such approaches are beneficial where downstream calculations effectively negate the perceived impact of upstream calculations. As such, the magnitude of downstream calculations can be fed back to impact the stored execution data from prior computations along the same path through the directed graph. The effect of this feedback can be tailored based on how many layers in the directed graph have passed between the value that is being updated and the newly obtained value.

The execution data can also be used to generate specific instructions for a later execution of the directed graph. For example, in the same way that the execution data can be used to generate a tag to indicate that a specific edge of the directed graph is of "low" priority, the execution data can also be used to generate an instruction to reduce the fidelity of the calculations associated with that edge of the directed graph, or to suppress the calculations associated with that edge of the directed graph. Specific approaches for conditioning the execution of the directed graph are discussed in more detail below. Many of these approaches can be triggered by reading the priority information from a tag, and triggering some form of conditional computation based off that tag. However, approaches in which the execution data is the instruction itself short circuits this intermediate lookup step by directly generating the instruction for how a portion of the directed graph should be executed at a later time.

The execution data can be stored in association with the portions of the directed graph to which they relate in various ways. For example, a markup could be stored in a distributed set of memory locations, or at a single memory location such that all of the data could be recalled using a single memory address or a contiguous sequence of memory addresses. The data can also be stored as an entirely separate data structure in memory. To use the example of execution data 213, the heat map could be stored separately with priority levels and tags identifying specific portions of the graph. Alternatively, the data or markup can be stored directly within the data structures that represent the directed graph and can be obtained along with the data for the directed graph via a single address call to memory. For example, the execution data could be stored in packet headers where the payload of each packet was the data that represented the directed graph itself. To use the example of a directed graph that implements an ANN, the weights or filters of the ANN could be stored along with a value that represented the impact of that weight or filter on the output tensor in response to the pilot input tensor. In a specific example that is in accordance with this class of approaches, a priority value for a weight tensor and the weight tensor itself could be obtained from a memory location using a single memory address.

Fig. 4 provides a conceptual data flow diagram for how the execution data and markup can be generated during the execution of the directed graph. As illustrated, different edges of the directed graph will be associated with different calculations 405 and 406. The two illustrated calculations are two matrix multiplications that could represent the multiplication of a set of weights with an input from a prior layer for purposes of generating a data element for the next layer in an artificial neural network. In the basic example illustrated in Fig. 4, the output of these calculations are compared to a threshold value Z. If the threshold is exceeded, the calculation is considered of high priority. If the threshold is not exceeded, the calculation is considered of low priority. In this example, the execution data is the determination made by this calculation. The execution data can then be used to contribute to a markup of the directed graph as illustrated by the different shading levels in the markup of execution data 404. Alternatively, or in combination, the execution data can be used to set a header value for the data elements that were utilized in calculations 405 and 406. As illustrated, the combined packet including the payload and header could then be retrieved from memory using a single memory address. For illustrative purposes, the values of tensors 407 and 408 contain more information than the tensors used in the calculations 405 and 406. This is to indicate the fact that the execution data can be used to markup, tag, or otherwise modify the original directed graph rather than the simplified version of the directed graph. In these situations, tensors 407 and 408 are tensors from the directed graph that correspond with the tensors from the simplified version of the directed graph that are used in calculations 405 and 406.

The execution data can be used to condition the execution of the directed graph in numerous ways. In general, the approaches used to simplify the directed graph for purposes of generating the simplified version of the directed graph can also be applied to condition the execution of the directed graph. However, as the conditional execution is being guided by information that has been obtained about the performance of the graph, the degree by which the computations are simplified can be much greater in the case of the conditioned execution than in the case of generating the simplified version. As stated previously, the steps associated with conditional execution in Fig. 2 are drawn along separate paths because in different approaches they will exhibit various temporal relationships to each other. For example, the directed graph could be primed for conditional execution prior to the conditional execution of the directed graph, using the stored execution data. In particular, in the approach in which the execution data is stored in the header of packets representing the directed graph, the directed graph would thereby be effectively primed for conditional execution because the priority data would be available for utilization to condition execution in real time as the payload of the packet was pulled for computation during the execution of the directed graph. The priming could include identifying the associated portion of directed graph data, packaging the execution and directed graph data into a data package, and storing the data package at a set location in memory. In another example, the execution of the directed graph will reference a separate data structure as computation is being carried out to determine if and how the associated computation should be conditioned. The separate data structure could be a markup with priorities stored in combination with identifiers of specific locations in the directed graph and the execution of the directed graph could involve obtaining the priorities from the separate data structure using the identifiers as the associated calculation was being carried out.

The execution of the directed graph can be conditioned in numerous ways.
Generally, the degree to which the computation is conditioned can be set to vary across the directed graph and can include various gradations that align with the relative priority of that portion of the graph. For example, regions of relatively high priority could be computed just as they would be in the unconditionally executed directed graph, while regions of relatively low priority could be excluded from computation entirely. The various approaches for conditional computation discussed below could be mixed and assigned in various ways to the levels of priority. For example, high, medium, and low priorities could be associated with three entirely separate conditional computation schemes. As another example, the conditional computation scheme could be held constant across the directed graph, but the relative accuracy of the scheme could be modified in accordance with the priorities. For example, a degree of rounding or down-sampling could be set proportional to the priority level with a smooth transition from original value execution, to rounded value execution, to execution conducted independently of the original values. Such approaches could be efficiently applied if the priority value was a smoothly varying numerical value.

The actual conditional execution of the directed graph can be conducted in various ways. The conditioning and the forms of conditional computation are separated concepts. Based on the execution data, the fidelity of various computations in the execution of the directed graph can be selectively decreased to different levels. For example, the conditional computation could involve decreasing the number of bits used to represent the inputs or outputs of a given computation. As another example, the data structure used to represent the inputs or outputs of a given computation could be simplified (e.g., from 8-bit floating point to 4- bit fixed point). As another example, the conditional computation could involve providing a fixed value in place of executing the computation. In one particular example, this value could be stored in a header of a data structure that would have been involved in the computation. As another example, the actual arithmetic portion of the computation could be simplified such that it discarded a certain number of least significant bits (LSBs) from the computation. As another example, the computation could be suppressed altogether without even the need for providing a masked value. In even more specific approaches, replacement values for the output of the computation could be stored downstream in association with later stages of the directed graph.

Fig. 5 is an illustration of various ways by which the conditional execution of the directed graph can be executed. Data flow diagram 500 includes a first computation 501 that needs to be computed to execute a directed graph. The branches moving down the page indicate various levels of conditional execution that could be used in place of the original calculation based on the priority value of computation 501. For example, if computation 501 had a major impact on the output tensor of the directed graph, it might be executed in full. However, if the impact was slight, the computation could be conditionally executed in accordance with one of the substitute levels shown by priority levels 502-505. The precise level applied could be determined ex ante and primed to affect the calculation as it occurs, or could be applied in real time. Priority level 502 would involve a slight rounding of the data values and the potential reduction in the number of bits utilized by the data structures storing the values. Priority level 503 would involve keeping only the sign and exponent of the original values. Priority level 504 would involve only keeping the sign of the original value. Priority level 505 would involve replacing the value with a predetermined value that is applied regardless of whatever the data actually was during run time. As illustrated, the value could be stored in the header of a packet, and could be pulled for substitution if the conditional execution system determined that the priority of the payload of the packet was very low.

The simplified version of the directed graph can be stored and utilized in combination with various input pilot tensors in order to develop different execution data that depends on a particular live input tensor for which accurate conditional execution is required. The simplified version of the directed graph can also be recalculated if the directed graph is modified such as by training or some other update. In the specific example of an ANN, the simplified version of the directed graph can be automatically updated after each training session or after the activations have changed by a given delta. As another example, the simplified version of the directed graph can be recalculated every time a monitoring system determines that there is a sufficient break in the training or usage of the directed graph. As another example, the simplified version of the directed graph can be recalculated periodically if a monitoring system determines that it is no longer accurate. Such a monitoring system could be configured to periodically run the same input tensor against a simplified version of the directed graph and the directed graph and check the loss of fidelity against a predetermined metric. If the monitoring system detected that the loss of fidelity exceeded this metric, the simplified version of the directed graph could be recalculated.

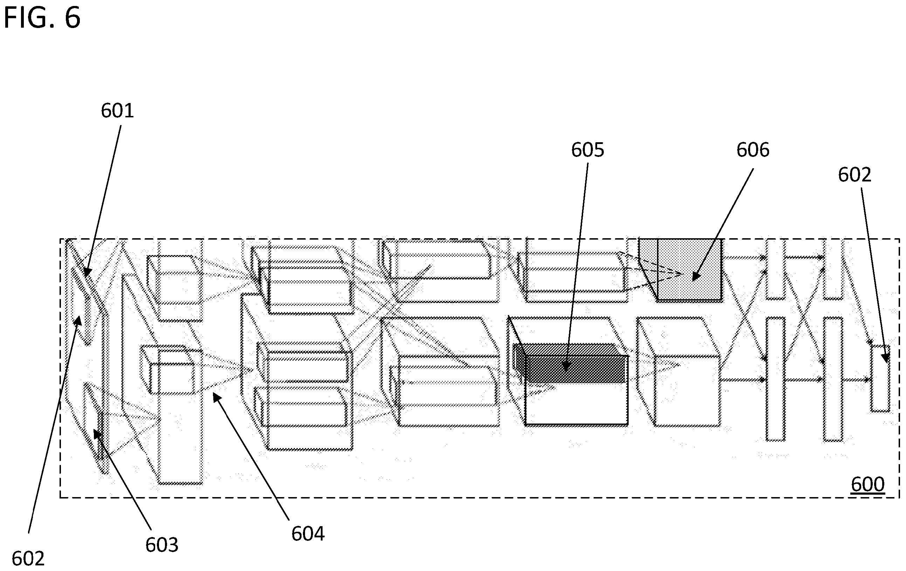

Fig 6. is a slice 600 of a directed graph of an ANN with convolutional layers and directly connected layers. The input tensor 601 is illustrated as a prism and includes 55x55x48 activations. The filters 602 and 603 that are slid around the prism of input tensor 601 are 5x5x48. The dashed lines from the filters to the next layer 604 illustrate how one position of the filter in the prior layer produces one element or "pixel" in the next layer. Note that this means 25x48 multiplications are required to produce a single pixel in the next layer. Not all of the prisms of the directed graph are shown, neither is every edge, as all of the pixels in each layer would be associated with an edge leading back to the prior layer and a specific location for the filter would be a vertex of the graph. The illustrated slice includes two highlighted segments 605 and 606. The highlighting includes different shades and is attached to different aspects of the directed graph. Highlighted segment 605 is darker than segment 606. The highlighting is an illustration of how the directed graph could be marked up. The shade of highlighting is proportional to the priority value of the associated aspect of the directed graph. Segment 605 is a filter of the ANN. The markup could be associated with the filter generally, or it could be associated with the filter as it exists in the specific location shown in this slice of the directed graph. Segment 606 is an entire prism of activations for the ANN that has been marked up with a certain priority value. As seen, the markup can be associated with any aspect of the ANN at any level of granularity. Priority values can also be assigned at a more granular level such as to segments of an activation or individual activations.

In the specific application of an ANN the conditional computation can be used in both the generation of an inference tensor from the ANN and in training of the ANN. In approaches using back propagation, the updating of the weights during back propagation could be varied based on a known priority of that section of the network. For example, the degree to which weights are updated or modified could be limited by the priority of that portion of the ANN. Weights in highly sensitive and important portions of the neural network could be updated with high precision while weights in low sensitivity portions of the neural network could be kept constant during back propagation.

While the specification has been described in detail with respect to specific embodiments of the invention, it will be appreciated that those skilled in the art, upon attaining an understanding of the foregoing, may readily conceive of alterations to, variations of, and equivalents to these embodiments provided they fall within the scope of the claims. Any of the method steps discussed above can be conducted by a processor operating with a computer-readable non-transitory medium storing instructions for those method steps. The computer-readable medium may be memory within a personal user device or a network accessible memory. The tensors used to implement the weights, accumulation values, filters, inputs, outputs, etc. of the systems described herein can all be four dimensional or five dimensional tensors. The directed graph and the simplified version of the directed graph described herein could be wholly different structures implemented in memory. However, the simplified version could be built off of the original data structure of the directed graph, and recalling the directed graph for later execution could comprise utilizing pointers to old values of the directed graph that were replaced during simplification. In this manner, overlapping values of the two versions of the graph would not need to take up more than one space in memory. These and other modifications and variations to the present invention may be practiced by those skilled in the art, without departing from the scope of the present invention as defined in and by the appended claims.

## Claims

1. A computer-implemented method for executing a directed graph, wherein (i) the directed graph is a neural network including a set of weights including at least one weight tensor, (ii) the directed graph includes a set of vertices and a set of edges interconnecting the set of vertices, (iii) the set of edges of the directed graph are calculations involving the set of weights for the neural network, (iv) at least a subset of the set of vertices are weights for the neural network, (v) a conditional execution of the directed graph produces an inference tensor, and (vi) the inference tensor is a response of the neural network to a live input tensor, and in which each step is conducted by a processor, wherein the method comprises:
deriving (201) a simplified version of the directed graph, including reducing a number of bits used to represent a set of original values of the directed graph to obtain a set of replacement values for the simplified version of the directed graph;
applying (202) a pilot input tensor to the simplified version of the directed graph;
obtaining (203) a collection of execution data during the application of the pilot input tensor to the simplified version of the directed graph;
storing the execution data in a distributed set of memory locations, wherein (i) the execution data includes a set of execution data values, (ii) the set of execution data values and the set of vertices have uniquely corresponding elements, (iii) each uniquely corresponding vertex in the set of vertices produces a contribution to the inference tensor in response to the pilot input tensor, and (iv) each execution data value in the set of execution data values is proportional in magnitude to the contribution to the inference tensor of each uniquely corresponding vertex in the set of vertices;
generating a markup of the directed graph using the collection of execution data, wherein the markup identifies a priority value for the at least one weight tensor;
applying (205) the live input tensor to the directed graph;
obtaining, from a memory location in the distributed set of memory locations using a single address, both: (i) a subset of execution data from the execution data; and (ii) the at least one weight tensor from the set of weights;
conditioning (204) the execution of the directed graph, during the application of the live input tensor to the directed graph, using the collection of execution data and using the markup, and wherein conditioning (204) the execution of the directed graph comprises reducing an accuracy of a computation using the at least one weight tensor based on the priority value; and
obtaining (206) an output tensor from the conditional execution of the directed graph;
wherein the conditioning (204) of the execution of the directed graph is conducted in real time using the execution data and the set of weights.

2. The computer-implemented method from claim 1, wherein:
the pilot input tensor and the live input tensor are not identical; and
the pilot input tensor and the live input tensor are stochastically dependent.

3. The computer-implemented method from claim 1, further comprising:
priming the directed graph for the conditional execution, prior to the conditional execution of the directed graph, using the stored execution data.

4. The computer-implemented method from claim 1, wherein:
an edge in the set of edges is a calculation using a four dimensional tensor.

5. The computer-implemented method from claim 1, wherein:
the set of original values refers to the set of weights;
the deriving of the simplified version of the directed graph includes replacing the set of original values with the set of replacement values; and
the simplified version of the directed graph has a same number of layers as the directed graph.

6. The computer-implemented method from claim 5, wherein the replacing comprises:
calculating the set of replacement values using a set of exponents of the set of original values.

7. The computer-implemented method from claim 1, further comprising:
generating a markup of the directed graph using the collection of execution data, wherein the markup tags the directed graph with different levels of priority;
storing the markup in the distributed set of memory locations; and
conditioning an update of the set of weights using the markup.

8. The computer-implemented method from claim 1, further comprising:
storing the markup in the distributed set of memory locations, wherein the markup tags the directed graph with different levels of priority; and
obtaining the priority value and the at least one weight tensor from the memory location in the distributed set of memory locations using the single address.

9. A processor, operating with a computer-readable non-transitory medium storing instructions, which when executed by the processor, cause the processor to conduct a method for generating an inference from a neural network, wherein (i) the neural network includes a set of weights including at least one weight tensor, (ii) the neural network includes a set of vertices and a set of edges interconnecting the set of vertices, (iii) the set of edges of the neural network are calculations involving the set of weights for the neural network, (iv) at least a subset of the set of vertices are weights for the neural network, (v) a conditional execution of the neural network produces an inference tensor, and (vi) the inference tensor is a response of the neural network to a second input, the method comprising:
deriving a simplified version of the neural network, including reducing a number of bits used to represent a set of original values of the neural network to obtain a set of replacement values for the simplified version of the neural network;
applying a first input to the simplified version of the neural network;
obtaining a collection of execution data during the application of the first input to the neural network;
storing the execution data in a distributed set of memory locations, wherein (i) the execution data includes a set of execution data values, (ii) the set of execution data values and the set of vertices have uniquely corresponding elements, (iii) each uniquely corresponding vertex in the set of vertices produces a contribution to the inference tensor in response to the first input, and (iv) each execution data value in the set of execution data values is proportional in magnitude to the contribution to the inference tensor of each uniquely corresponding vertex in the set of vertices;
generating a markup of the neural network using the collection of execution data, wherein the markup identifies a priority value for the at least one weight tensor;
applying the second input to the neural network;
obtaining, from a memory location in the distributed set of memory locations using a single address, both: (i) a subset of execution data from the execution data; and (ii) the at least one weight tensor from the set of weights;
conditioning a computation of the neural network, during the application of the second input to the neural network, using the collection of execution data and using the markup, and wherein conditioning the execution of the neural network comprises reducing an accuracy of the computation using the at least one weight tensor based on the priority value; and
obtaining the inference from the conditional computation of the neural network;
wherein the conditional computation of the neural network is conducted in real time using the execution data and the set of weights.

10. A computer-implemented method for executing a directed graph, wherein (i) the directed graph is a neural network including a set of weights including at least one weight tensor, (ii) the directed graph includes a set of vertices and a set of edges interconnecting the set of vertices, (iii) the set of edges of the directed graph are calculations involving the set of weights for the neural network, (iv) at least a subset of the set of vertices are weights for the neural network, (v) a conditional execution of the directed graph produces an inference tensor, and (vi) the inference tensor is a response of the neural network to a live input tensor, and in which each step is conducted by a processor, wherein the method comprises:
deriving (201) a simplified version of the directed graph, including utilizing polynomial interpolation to produce a function that gives an approximation of the at least one weight tensor;
applying (202) a pilot input tensor to the simplified version of the directed graph;
obtaining (203) a collection of execution data during the application of the pilot input tensor to the simplified version of the directed graph;
storing the execution data in a distributed set of memory locations, wherein (i) the execution data includes a set of execution data values, (ii) the set of execution data values and the set of vertices have uniquely corresponding elements, (iii) each uniquely corresponding vertex in the set of vertices produces a contribution to the inference tensor in response to the pilot input tensor, and (iv) each execution data value in the set of execution data values is proportional in magnitude to the contribution to the inference tensor of each uniquely corresponding vertex in the set of vertices;
generating a markup of the directed graph using the collection of execution data, wherein the markup identifies a priority value for the at least one weight tensor;
applying (205) the live input tensor to the directed graph;
obtaining, from a memory location in the distributed set of memory locations using a single address, both: (i) a subset of execution data from the execution data; and (ii) the at least one weight tensor from the set of weights;
conditioning (204) the execution of the directed graph, during the application of the live input tensor to the directed graph, using the collection of execution data and using the markup, and wherein conditioning (204) the execution of the directed graph comprises reducing an accuracy of a computation using the at least one weight tensor based on the priority value; and
obtaining (206) an output tensor from the conditional execution of the directed graph;
wherein the conditioning (204) of the execution of the directed graph is conducted in real time using the execution data and the set of weights.

11. The computer-implemented method from claim 10, wherein:
the deriving of the simplified version of the directed graph includes down-sampling the directed graph by a sampling factor;
the simplified version of the directed graph is thereby a down-sampled version of the directed graph;
a first complete set of tensors used for executing the simplified version of the directed graph has a rank; and
a second complete set of tensors used for executing the directed graph has the rank.

12. The computer-implemented method from claim 10, wherein:
the deriving of the simplified version of the directed graph utilizes polynomial interpolation to produce a function that gives an approximation of the at least one weight tensor; and
the function is a polynomial with a set of coefficients equal to one plus an order of the polynomial.

## Patentansprüche

1. Ein computerimplementiertes Verfahren zur Ausführung eines gerichteten Graphen, wobei (i) der gerichtete Graph ein neuronales Netzwerk umfasst, das eine Menge von Gewichten einschließlich mindestens eines Gewichtstensors umfasst, (ii) der gerichtete Graph eine Menge von Knoten und eine Menge von Kanten umfasst, die die Knotenmenge miteinander verbinden, (iii) die Kantenmenge des gerichteten Graphen Berechnungen unter Einbeziehung der Gewichtemenge des neuronalen Netzwerks sind, (iv) mindestens eine Teilmenge der Knotenmenge Gewichte des neuronalen Netzwerks sind, (v) eine bedingte Ausführung des gerichteten Graphen einen Inferenz-Tensor erzeugt, und (vi) der Inferenz-Tensor eine Antwort des neuronalen Netzwerks auf einen Live-Eingabetensor ist, und wobei jeder Schritt von einem Prozessor durchgeführt wird, wobei das Verfahren Folgendes umfasst:
Ableiten (201) einer vereinfachten Version des gerichteten Graphen, einschließlich der Reduzierung der Anzahl von Bits, die zur Darstellung einer Menge ursprünglicher Werte des gerichteten Graphen verwendet werden, um eine Menge von Ersatzwerten für die vereinfachte Version des gerichteten Graphen zu erhalten;
Anwenden (202) eines Piloteingabetensors auf die vereinfachte Version des gerichteten Graphen;
Erhalten (203) einer Sammlung von Ausführungsdaten während der Anwendung des Piloteingabetensors auf die vereinfachte Version des gerichteten Graphen;
Speichern der Ausführungsdaten in einer verteilten Menge von Speicherorten, wobei (i) die Ausführungsdaten eine Menge von Ausführungsdatenwerten umfassen, (ii) die Menge von Ausführungsdatenwerten und die Knotenmenge eindeutig entsprechende Elemente aufweisen, (iii) jeder eindeutig entsprechende Knoten in der Knotenmenge einen Beitrag zum Inferenz-Tensor als Reaktion auf den Piloteingabetensor liefert, und (iv) jeder Ausführungsdatenwert in der Menge von Ausführungsdatenwerten betragsmäßig proportional zum Beitrag des jeweiligen eindeutig entsprechenden Knotens zum Inferenz-Tensor ist;
Erzeugen einer Markierung des gerichteten Graphen unter Verwendung der Sammlung von Ausführungsdaten, wobei die Markierung einen Prioritätswert für den mindestens einen Gewichtstensor identifiziert;
Anwenden (205) des Live-Eingabetensors auf den gerichteten Graphen; Erhalten, aus einem Speicherort in der verteilten Menge von Speicherorten unter Verwendung einer einzelnen Adresse, sowohl: (i) eine Teilmenge von Ausführungsdaten aus den Ausführungsdaten; und (ii) den mindestens einen Gewichtstensor aus der Menge der Gewichte;
Konditionieren (204) der Ausführung des gerichteten Graphen während der Anwendung des Live-Eingabetensors auf den gerichteten Graphen unter Verwendung der Sammlung von Ausführungsdaten und der Markierung, wobei das Konditionieren (204) der Ausführung des gerichteten Graphen die Reduzierung der Genauigkeit einer Berechnung unter Verwendung des mindestens einen Gewichtstensors basierend auf dem Prioritätswert umfasst; und
Erhalten (206) eines Ausgabetensors aus der bedingten Ausführung des gerichteten Graphen;
wobei das Konditionieren (204) der Ausführung des gerichteten Graphen in Echtzeit unter Verwendung der Ausführungsdaten und der Gewichtemenge durchgeführt wird.

2. Das computerimplementierte Verfahren nach Anspruch 1, wobei:
der Piloteingabetensor und der Live-Eingabetensor nicht identisch sind; und
der Piloteingabetensor und der Live-Eingabetensor stochastisch abhängig sind.

3. Das computerimplementierte Verfahren nach Anspruch 1, ferner umfassend:
Vorbereiten des gerichteten Graphen für die bedingte Ausführung vor der bedingten Ausführung des gerichteten Graphen unter Verwendung der gespeicherten Ausführungsdaten.

4. Das computerimplementierte Verfahren nach Anspruch 1, wobei:
eine Kante in der Kantenmenge eine Berechnung unter Verwendung eines vierdimensionalen Tensors ist.

5. Das computerimplementierte Verfahren nach Anspruch 1, wobei:
die Menge ursprünglicher Werte sich auf die Gewichtemenge bezieht;
das Ableiten der vereinfachten Version des gerichteten Graphen den Austausch der Menge ursprünglicher Werte durch die Menge der Ersatzwerte umfasst; und
die vereinfachte Version des gerichteten Graphen die gleiche Anzahl von Schichten wie der gerichtete Graph aufweist.

6. Das computerimplementierte Verfahren nach Anspruch 5, wobei der Austausch Folgendes umfasst:
Berechnen der Menge von Ersatzwerten unter Verwendung einer Menge von Exponenten der Menge ursprünglicher Werte.

7. Das computerimplementierte Verfahren nach Anspruch 1, ferner umfassend:
Erzeugen einer Markierung des gerichteten Graphen unter Verwendung der Sammlung von Ausführungsdaten, wobei die Markierung den gerichteten Graphen mit verschiedenen Prioritätsstufen markiert;
Speichern der Markierung in der verteilten Menge von Speicherorten; und
Konditionieren einer Aktualisierung der Gewichtemenge unter Verwendung der Markierung.

8. Das computerimplementierte Verfahren nach Anspruch 1, ferner umfassend:
Speichern der Markierung in der verteilten Menge von Speicherorten, wobei die Markierung den gerichteten Graphen mit verschiedenen Prioritätsstufen markiert; und
Erhalten des Prioritätswerts und des mindestens einen Gewichtstensors aus dem Speicherort in der verteilten Menge von Speicherorten unter Verwendung der einzelnen Adresse.

9. Ein Prozessor, der mit einem computerlesbaren, nicht flüchtigen Medium arbeitet, das Anweisungen speichert, die, wenn sie vom Prozessor ausgeführt werden, den Prozessor veranlassen, ein Verfahren zum Generieren einer Inferenz aus einem neuronalen Netzwerk durchzuführen, wobei (i) das neuronale Netzwerk eine Gewichtemenge einschließlich mindestens eines Gewichtstensors umfasst, (ii) das neuronale Netzwerk eine Knotenmenge und eine Kantenmenge umfasst, die die Knotenmenge miteinander verbinden, (iii) die Kantenmenge des neuronalen Netzwerks Berechnungen unter Einbeziehung der Gewichtemenge des neuronalen Netzwerks sind, (iv) mindestens eine Teilmenge der Knotenmenge Gewichte des neuronalen Netzwerks sind, (v) eine bedingte Ausführung des neuronalen Netzwerks einen Inferenz-Tensor erzeugt, und (vi) der Inferenz-Tensor eine Antwort des neuronalen Netzwerks auf eine zweite Eingabe ist, wobei das Verfahren umfasst:
Ableiten einer vereinfachten Version des neuronalen Netzwerks, einschließlich der Reduzierung der Anzahl von Bits zur Darstellung einer Menge ursprünglicher Werte des neuronalen Netzwerks, um eine Menge von Ersatzwerten für die vereinfachte Version zu erhalten;
Anwenden einer ersten Eingabe auf die vereinfachte Version des neuronalen Netzwerks;
Erhalten einer Sammlung von Ausführungsdaten während der Anwendung der ersten Eingabe auf das neuronale Netzwerk;
Speichern der Ausführungsdaten in einer verteilten Menge von Speicherorten, wobei (i) die Ausführungsdaten eine Menge von Ausführungsdatenwerten umfassen, (ii) die Menge von Ausführungsdatenwerten und die Knotenmenge eindeutig entsprechende Elemente aufweisen, (iii) jeder eindeutig entsprechende Knoten in der Knotenmenge einen Beitrag zum Inferenz-Tensor als Reaktion auf die erste Eingabe liefert, und (iv) jeder Ausführungsdatenwert betragsmäßig proportional zum Beitrag des Knotens zum Inferenz-Tensor ist;
Erzeugen einer Markierung des neuronalen Netzwerks unter Verwendung der Sammlung von Ausführungsdaten, wobei die Markierung einen Prioritätswert für den mindestens einen Gewichtstensor identifiziert;
Anwenden der zweiten Eingabe auf das neuronale Netzwerk;
Erhalten, aus einem Speicherort unter Verwendung einer einzelnen Adresse, sowohl: (i) eine Teilmenge von Ausführungsdaten aus den Ausführungsdaten; und (ii) den mindestens einen Gewichtstensor aus der Gewichtemenge;
Konditionieren einer Berechnung des neuronalen Netzwerks während der Anwendung der zweiten Eingabe unter Verwendung der Sammlung von Ausführungsdaten und der Markierung, wobei das Konditionieren der Ausführung die Reduzierung der Genauigkeit der Berechnung unter Verwendung des Gewichtstensors auf Basis des Prioritätswerts umfasst; und
Erhalten der Inferenz aus der bedingten Berechnung des neuronalen Netzwerks;
wobei die bedingte Berechnung in Echtzeit unter Verwendung der Ausführungsdaten und der Gewichtemenge durchgeführt wird.

10. Ein computerimplementiertes Verfahren zur Ausführung eines gerichteten Graphen, wobei (i) der gerichtete Graph ein neuronales Netzwerk mit einer Gewichtemenge einschließlich mindestens eines Gewichtstensors ist, (ii) der gerichtete Graph eine Knoten- und eine Kantenmenge umfasst, (iii) die Kanten Berechnungen unter Einbeziehung der Gewichte sind, (iv) eine Teilmenge der Knoten Gewichte sind, (v) eine bedingte Ausführung einen Inferenz-Tensor erzeugt, und (vi) der Inferenz-Tensor eine Antwort auf einen Live-Eingabetensor ist, wobei das Verfahren umfasst:
Ableiten (201) einer vereinfachten Version des gerichteten Graphen, einschließlich Verwendung von Polynominterpolation zur Erzeugung einer Funktion, die eine Näherung des mindestens einen Gewichtstensors liefert;
Anwenden (202) eines Piloteingabetensors auf die vereinfachte Version des gerichteten Graphen;
Erhalten (203) einer Sammlung von Ausführungsdaten während der Anwendung des Piloteingabetensors auf die vereinfachte Version des gerichteten Graphen;
Speichern der Ausführungsdaten in einer verteilten Menge von Speicherorten, wobei (i) die Ausführungsdaten eine Menge von Ausführungsdatenwerten umfassen, (ii) die Menge von Ausführungsdatenwerten und die Knotenmenge eindeutig entsprechende Elemente aufweisen, (iii) jeder eindeutig entsprechende Knoten in der Knotenmenge einen Beitrag zum Inferenz-Tensor als Reaktion auf den Piloteingabetensor liefert, und (iv) jeder Ausführungsdatenwert in der Menge von Ausführungsdatenwerten betragsmäßig proportional zum Beitrag des jeweiligen eindeutig entsprechenden Knotens zum Inferenz-Tensor ist;
Erzeugen einer Markierung des gerichteten Graphen unter Verwendung der Sammlung von Ausführungsdaten, wobei die Markierung einen Prioritätswert für den mindestens einen Gewichtstensor identifiziert;
Anwenden (205) des Live-Eingabetensors auf den gerichteten Graphen; Erhalten, aus einem Speicherort in der verteilten Menge von Speicherorten unter Verwendung einer einzelnen Adresse, sowohl: (i) eine Teilmenge von Ausführungsdaten aus den Ausführungsdaten; und (ii) den mindestens einen Gewichtstensor aus der Menge der Gewichte;
Konditionieren (204) der Ausführung des gerichteten Graphen während der Anwendung des Live-Eingabetensors auf den gerichteten Graphen unter Verwendung der Sammlung von Ausführungsdaten und der Markierung, wobei das Konditionieren (204) der Ausführung des gerichteten Graphen die Reduzierung der Genauigkeit einer Berechnung unter Verwendung des mindestens einen Gewichtstensors basierend auf dem Prioritätswert umfasst; und
Erhalten (206) eines Ausgabetensors aus der bedingten Ausführung des gerichteten Graphen;
wobei das Konditionieren (204) der Ausführung des gerichteten Graphen in Echtzeit unter Verwendung der Ausführungsdaten und der Gewichtemenge durchgeführt wird.

11. Das computerimplementierte Verfahren nach Anspruch 10, wobei:
das Ableiten die Reduzierung des gerichteten Graphen durch einen Abtastfaktor umfasst;
die vereinfachte Version daher eine unterabgetastete Version ist;
ein erster Tensorensatz für die vereinfachte Version einen Rang aufweist; und
ein zweiter Tensorensatz für den vollständigen Graphen denselben Rang aufweist.

12. Das computerimplementierte Verfahren nach Anspruch 10, wobei:
das Ableiten die Verwendung von Polynominterpolation zur Annäherung des Gewichtstensors umfasst; und
die Funktion ein Polynom mit einem Satz von Koeffizienten ist, der gleich Eins plus dem Grad des Polynoms ist.

## Revendications

1. Un procédé mis en œuvre par ordinateur pour exécuter un graphe orienté, dans lequel (i) le graphe orienté est un réseau neuronal comprenant un ensemble de poids incluant au moins un tenseur de poids, (ii) le graphe orienté comprend un ensemble de sommets et un ensemble d'arêtes interconnectant l'ensemble de sommets, (iii) l'ensemble d'arêtes du graphe orienté sont des calculs impliquant l'ensemble de poids du réseau neuronal, (iv) au moins un sous-ensemble de l'ensemble de sommets représente des poids du réseau neuronal, (v) une exécution conditionnelle du graphe orienté produit un tenseur d'inférence, et (vi) le tenseur d'inférence est une réponse du réseau neuronal à un tenseur d'entrée en direct, et dans lequel chaque étape est réalisée par un processeur, le procédé comprenant :
dériver (201) une version simplifiée du graphe orienté, comprenant la réduction du nombre de bits utilisés pour représenter un ensemble de valeurs originales du graphe orienté afin d'obtenir un ensemble de valeurs de remplacement pour la version simplifiée du graphe orienté;
appliquer (202) un tenseur d'entrée pilote à la version simplifiée du graphe orienté;
obtenir (203) une collection de données d'exécution lors de l'application du tenseur d'entrée pilote à la version simplifiée du graphe orienté;
stocker les données d'exécution dans un ensemble distribué d'emplacements mémoire, dans lequel (i) les données d'exécution comprennent un ensemble de valeurs de données d'exécution, (ii) l'ensemble de valeurs de données d'exécution et l'ensemble de sommets ont des éléments correspondant de manière unique, (iii) chaque sommet correspondant de manière unique de l'ensemble de sommets produit une contribution au tenseur d'inférence en réponse au tenseur d'entrée pilote, et (iv) chaque valeur de donnée d'exécution de l'ensemble de valeurs de données d'exécution est proportionnelle en magnitude à la contribution au tenseur d'inférence de chaque sommet correspondant de manière unique de l'ensemble de sommets;
générer un balisage du graphe orienté à l'aide de la collection de données d'exécution, dans lequel le balisage identifie une valeur de priorité pour le ou les tenseurs de poids;
appliquer (205) le tenseur d'entrée en direct au graphe orienté;
obtenir, à partir d'un emplacement mémoire de l'ensemble distribué d'emplacements mémoire à l'aide d'une seule adresse, à la fois : (i) un sous-ensemble de données d'exécution provenant des données d'exécution; et (ii) le ou les tenseurs de poids de l'ensemble de poids;
conditionner (204) l'exécution du graphe orienté, lors de l'application du tenseur d'entrée en direct au graphe orienté, à l'aide de la collection de données d'exécution et du balisage, et dans lequel le conditionnement (204) de l'exécution du graphe orienté comprend la réduction de la précision d'un calcul utilisant le ou les tenseurs de poids en fonction de la valeur de priorité; et
obtenir (206) un tenseur de sortie à partir de l'exécution conditionnelle du graphe orienté;
dans lequel le conditionnement (204) de l'exécution du graphe orienté est réalisé en temps réel à l'aide des données d'exécution et de l'ensemble de poids.

2. Le procédé mis en œuvre par ordinateur selon la revendication 1, dans lequel :
le tenseur d'entrée pilote et le tenseur d'entrée en direct ne sont pas identiques ; et
le tenseur d'entrée pilote et le tenseur d'entrée en direct sont dépendants de manière stochastique.

3. Le procédé mis en œuvre par ordinateur selon la revendication 1, comprenant en outre :
amorcer le graphe orienté pour l'exécution conditionnelle, avant l'exécution conditionnelle du graphe orienté, à l'aide des données d'exécution stockées.

4. Le procédé mis en œuvre par ordinateur selon la revendication 1, dans lequel :
une arête dans l'ensemble d'arêtes est un calcul utilisant un tenseur à quatre dimensions.

5. Le procédé mis en œuvre par ordinateur selon la revendication 1, dans lequel :
l'ensemble de valeurs originales fait référence à l'ensemble de poids ;
la dérivation de la version simplifiée du graphe orienté comprend le remplacement de l'ensemble de valeurs originales par l'ensemble de valeurs de remplacement ; et
la version simplifiée du graphe orienté comporte un même nombre de couches que le graphe orienté.

6. Le procédé mis en œuvre par ordinateur selon la revendication 5, dans lequel le remplacement comprend :
calculer l'ensemble de valeurs de remplacement à l'aide d'un ensemble d'exposants de l'ensemble de valeurs originales.

7. Le procédé mis en œuvre par ordinateur selon la revendication 1, comprenant en outre:
générer un balisage du graphe orienté à l'aide de la collection de données d'exécution, dans lequel le balisage marque le graphe orienté avec différents niveaux de priorité ;
stocker le balisage dans l'ensemble distribué d'emplacements mémoire ; et
conditionner une mise à jour de l'ensemble de poids à l'aide du balisage.

8. Le procédé mis en œuvre par ordinateur selon la revendication 1, comprenant en outre :
stocker le balisage dans l'ensemble distribué d'emplacements mémoire, dans lequel le balisage marque le graphe orienté avec différents niveaux de priorité ; et
obtenir la valeur de priorité et le ou les tenseurs de poids à partir de l'emplacement mémoire dans l'ensemble distribué d'emplacements mémoire à l'aide de la seule adresse.

9. Un processeur, fonctionnant avec un support non transitoire lisible par ordinateur stockant des instructions, lesquelles, lorsqu'elles sont exécutées par le processeur, amènent le processeur à effectuer un procédé pour générer une inférence à partir d'un réseau neuronal, dans lequel (i) le réseau neuronal comprend un ensemble de poids incluant au moins un tenseur de poids, (ii) le réseau neuronal comprend un ensemble de sommets et un ensemble d'arêtes interconnectant l'ensemble de sommets, (iii) l'ensemble d'arêtes du réseau neuronal sont des calculs impliquant l'ensemble de poids du réseau neuronal, (iv) au moins un sous-ensemble de l'ensemble de sommets représente des poids du réseau neuronal, (v) une exécution conditionnelle du réseau neuronal produit un tenseur d'inférence, et (vi) le tenseur d'inférence est une réponse du réseau neuronal à une seconde entrée, le procédé comprenant :
dériver une version simplifiée du réseau neuronal, comprenant la réduction du nombre de bits utilisés pour représenter un ensemble de valeurs originales du réseau neuronal afin d'obtenir un ensemble de valeurs de remplacement pour la version simplifiée du réseau neuronal ;
appliquer une première entrée à la version simplifiée du réseau neuronal ;
obtenir une collection de données d'exécution lors de l'application de la première entrée au réseau neuronal ;
stocker les données d'exécution dans un ensemble distribué d'emplacements mémoire, dans lequel (i) les données d'exécution comprennent un ensemble de valeurs de données d'exécution, (ii) l'ensemble de valeurs de données d'exécution et l'ensemble de sommets ont des éléments correspondant de manière unique, (iii) chaque sommet correspondant de manière unique dans l'ensemble de sommets produit une contribution au tenseur d'inférence en réponse à la première entrée, et (iv) chaque valeur de données d'exécution dans l'ensemble de valeurs de données d'exécution est proportionnelle en magnitude à la contribution au tenseur d'inférence de chaque sommet correspondant de manière unique dans l'ensemble de sommets ;
générer un balisage du réseau neuronal à l'aide de la collection de données d'exécution, dans lequel le balisage identifie une valeur de priorité pour le ou les tenseurs de poids ;
appliquer la seconde entrée au réseau neuronal ;
obtenir, à partir d'un emplacement mémoire dans l'ensemble distribué d'emplacements mémoire à l'aide d'une seule adresse, à la fois : (i) un sous-ensemble de données d'exécution provenant des données d'exécution ; et (ii) le ou les tenseurs de poids de l'ensemble de poids ;
conditionner un calcul du réseau neuronal, lors de l'application de la seconde entrée au réseau neuronal, à l'aide de la collection de données d'exécution et du balisage, et dans lequel le conditionnement de l'exécution du réseau neuronal comprend la réduction de la précision du calcul utilisant le ou les tenseurs de poids en fonction de la valeur de priorité ; et
obtenir l'inférence à partir du calcul conditionnel du réseau neuronal ;
dans lequel le calcul conditionnel du réseau neuronal est effectué en temps réel à l'aide des données d'exécution et de l'ensemble de poids.

10. Un procédé mis en œuvre par ordinateur pour exécuter un graphe orienté, dans lequel (i) le graphe orienté est un réseau neuronal comprenant un ensemble de poids incluant au moins un tenseur de poids, (ii) le graphe orienté comprend un ensemble de sommets et un ensemble d'arêtes interconnectant l'ensemble de sommets, (iii) l'ensemble d'arêtes du graphe orienté sont des calculs impliquant l'ensemble de poids du réseau neuronal, (iv) au moins un sous-ensemble de l'ensemble de sommets représente des poids du réseau neuronal, (v) une exécution conditionnelle du graphe orienté produit un tenseur d'inférence, et (vi) le tenseur d'inférence est une réponse du réseau neuronal à un tenseur d'entrée en direct, et dans lequel chaque étape est réalisée par un processeur, le procédé comprenant :
dériver (201) une version simplifiée du graphe orienté, comprenant l'utilisation d'une interpolation polynomiale pour produire une fonction donnant une approximation d'au moins un tenseur de poids ;
appliquer (202) un tenseur d'entrée pilote à la version simplifiée du graphe orienté ;
obtenir (203) une collection de données d'exécution lors de l'application du tenseur d'entrée pilote à la version simplifiée du graphe orienté ;
stocker les données d'exécution dans un ensemble distribué d'emplacements mémoire, dans lequel (i) les données d'exécution comprennent un ensemble de valeurs de données d'exécution, (ii) l'ensemble de valeurs de données d'exécution et l'ensemble de sommets ont des éléments correspondant de manière unique, (iii) chaque sommet correspondant de manière unique dans l'ensemble de sommets produit une contribution au tenseur d'inférence en réponse au tenseur d'entrée pilote, et (iv) chaque valeur de données d'exécution dans l'ensemble de valeurs de données d'exécution est proportionnelle en magnitude à la contribution au tenseur d'inférence de chaque sommet correspondant de manière unique dans l'ensemble de sommets ;
générer un balisage du graphe orienté à l'aide de la collection de données d'exécution, dans lequel le balisage identifie une valeur de priorité pour le ou les tenseurs de poids ;
appliquer (205) le tenseur d'entrée en direct au graphe orienté ;
obtenir, à partir d'un emplacement mémoire dans l'ensemble distribué d'emplacements mémoire à l'aide d'une seule adresse, à la fois : (i) un sous-ensemble de données d'exécution provenant des données d'exécution ; et (ii) le ou les tenseurs de poids de l'ensemble de poids ;
conditionner (204) l'exécution du graphe orienté, lors de l'application du tenseur d'entrée en direct au graphe orienté, à l'aide de la collection de données d'exécution et du balisage, et dans lequel conditionner (204) l'exécution du graphe orienté comprend réduire une précision d'un calcul utilisant le ou les tenseurs de poids en fonction de la valeur de priorité ; et
obtenir (206) un tenseur de sortie à partir de l'exécution conditionnelle du graphe orienté ;
dans lequel le conditionnement (204) de l'exécution du graphe orienté est effectué en temps réel à l'aide des données d'exécution et de l'ensemble de poids.

11. Le procédé mis en œuvre par ordinateur selon la revendication 10, dans lequel :
la dérivation de la version simplifiée du graphe orienté comprend un sous-échantillonnage du graphe orienté par un facteur d'échantillonnage ;
la version simplifiée du graphe orienté est ainsi une version sous-échantillonnée du graphe orienté ;
un premier ensemble complet de tenseurs utilisé pour exécuter la version simplifiée du graphe orienté a un rang ; et
un second ensemble complet de tenseurs utilisé pour exécuter le graphe orienté a le rang.

12. Le procédé mis en œuvre par ordinateur selon la revendication 10, dans lequel :
la dérivation de la version simplifiée du graphe orienté utilise une interpolation polynomiale pour produire une fonction donnant une approximation d'au moins un tenseur de poids ; et
la fonction est un polynôme avec un ensemble de coefficients égal à un plus un ordre du polynôme.
